# EUROPEAN PATENT SPECIFICATION

(11) **EP 2 339 926 B1**
(45) Date of publication and mention of the grant of the patent: **11.04.2018**
(21) Application number: 09778332.8
(22) Date of filing: 04.09.2009
(51) Int. Cl.: A23G 1/52, A23G 3/34, A23G 1/54, A23G 3/54

(54) **FAT-BASED CONFECTIONERY MATERIAL AND PROCESS FOR PRODUCTION THEREOF**
FAT-BASIERENDES KONFISERIE MATERIAL UND VERFAHREN ZU DESSEN HERSTELLUNG
MATÉRIAU POUR CONFISERIE À BASE DE MATIÈRES GRASSES ET SON PROCÉDÉ DE PRODUCTION

(30) Priority: 19.09.2008 GB 0817122
(43) Date of publication of application: 06.07.2011
(73) Proprietor: Nestec S.A., 1800 Vevey (CH)
(72) Inventor: WALKER, John Howard, York YO32 3ZU (GB); COUZENS, Patrick, CH 1860 Aigle (CH)
(74) Representative: Lumsden, Stuart Edward Henry
(86) International application number: PCT/EP2009/006418
(87) International publication number: WO 2010/031502

(56) References cited:
- EP-A- 0 297 054
- WO-A-2007/070754
- WO-A-2009/066074
- WO-A-2009/140351
- GB-A- 459 582
- GB-A- 459 583
- JP-A- 1 047 345
- JP-A- 60 176 541
- US-A- 3 843 819
- US-A- 5 149 560
- US-A- 6 010 735

## Description

### Field of the invention

The present invention relates to a fat-based confectionery material, such as chocolate, containing liquid-filled cavities or bubbles and a method of making such a material.

### Background of the invention

Aerated fat-based confectionery products are well known and there are a number of international aerated chocolate brands on the market such as Nestle Aero® and Milka Luflee®. Chocolate containing bubbles of air is appreciated by the consumer because it is lighter than solid chocolate and provides a particular mouthfeel.

A process for making aerated chocolate was described in 1935 in GB459583 (to Rowntree) which involves incorporating air or other gas in molten chocolate, for example by using a whisk, and then expanding the bubbles by reducing the pressure. The chocolate is cooled to set it.

US4272558 discloses a process for producing a cellular chocolate where gas is incorporated into the chocolate under pressure. When the pressure is released, bubbles are formed in the chocolate which is then solidified by cooling. US3843819 discloses edible capsules comprising a liquid filling consisting of syrup and liqueur surrounded by a continuous film of hydrophobic material as well as their use in chocolate or confectionery articles.

JP60176541 discloses the preparation of chocolate confectionery with sugar cream filling and added invertase to give after softening a desirable syrupy texture. Other processes to reduce the density of fat based confectionery products are now available. M.S. Jeffery [The Manufacturing Confectioner, November 1989 p 53-56] reviews techniques of chocolate aeration. In addition, Jeffery describes a process where air or another gas is incorporated into the fat phase as it is cooled and crystallized.

Some consumers enjoy the light texture of aerated chocolate but consider that it gives a dry a mouth-feel. Such consumers appreciate the combination of aerated chocolate and a liquid component such as in Aero® Caramel where there is a separate layer of caramel on top of the aerated chocolate.

It is an object of the invention to provide a new fat-based confectionery product with a soft melting texture.

### Summary of the invention

Accordingly, according to a first aspect the invention provides a fat-based confectionery material with a continuous fat phase characterised in that the material is dispersed with bubbles containing a liquid fondant filling, wherein the liquid fondant filling of the bubbles is in direct contact with the fat-based confectionery material. The fat-based confectionery material of the invention has advantageous qualities, both visually and organoleptically, including a unique texture with a smooth mouthfeel.
According to a second aspect the invention provides a confectionery product comprising a fat-based confectionery material as described above.

According to a further aspect the invention provides a method for producing a fat-based confectionery material with a continuous fat phase dispersed with bubbles containing the liquid fondant filling.

### Brief description of the drawings

Figure 1 is a schematic diagram showing a pump assembly which may be used in a method according to the invention. (A) Side view of a pump assembly. (B) Bottom view of a rotating valve plate in a pump assembly.
Figure 2 is a schematic diagram illustrating one embodiment of the present invention whereby a pulsed feed of chilled liquid filling is introduced into a fast flow of fat-containing confectionery material in a manifold.

### Detailed description of the invention

The invention provides a fat-based confectionery material with a continuous fat phase characterised in that the material is dispersed with bubbles containing a liquid fondant filling, wherein the liquid fondant filling of the bubbles is in direct contact with the fat-based confectionery material. In the context of the invention, "fat-based confectionary materials" are understood to be materials comprising at least a fat and preferably a sugar. The fat may be cocoa butter, cocoa butter substitute, cocoa butter replacers, cocoa butter improvers or cocoa butter equivalents, among others. The sugars may include sucrose, fructose, sugar replacers such as polyols (e.g., maltitol, lactitol, isomalt, erythritol, sorbitol, mannitol, xylitol) or bulking agents like polydextrose or other sweeteners like tagatose or high intensity sweeteners like saccharin, aspartame, acesulfame-K, cyclamate, neohesperidin, thaumathin, sucralose, alitame, neotame or any combination thereof.
Fat-based confectionery materials may typically comprise sugar, milk derived components, and fat and solids from vegetable or cocoa sources in differing proportions.
The fat-based confectionery material may comprise chocolate, including dark, milk or white chocolate, and may be aerated or micro-aerated chocolate.
Alternatively the fat-based confectionery material may comprise any product or substance having rheological characteristics similar or substantially comparable to those of chocolate. Such a product may include chocolate substitutes containing direct cocoa butter replacements, stearines, coconut oil, palm oil, butter or any mixture thereof; nut pastes such as peanut butter; praline; confectioner's coatings also known as compound or couvertures, used for covering ice cream or cakes, usually comprising chocolate analogues with cocoa butter replaced by a nontempering fat; or "Caramac" sold by Nestle comprising non-cocoa butter fats, sugar and milk. In addition, chocolate products containing up to 90% water are also included such as the water-containing chocolate emulsions described in EP-A-1759591.
According to the invention the fat-based confectionery material has a continuous fat phase which is dispersed with bubbles containing liquid fondant filling, wherein the liquid fondant filling of the bubbles is in direct contact with the fat-based confectionery material. The bubbles preferably have a mean diameter of between 0.05 mm and 8 mm, preferably between 1 mm and 5 mm, and most preferably between 2 mm and 4 mm.

If it is desired to maximise the shelf life of the fat-based confectionery material, a liquid filling is chosen which will not dissolve the sugar that may be present in the fat-based confectionery material, nor dissolve or soften the fat phase of the fat-based confectionery material. Furthermore, it is desirable that the liquid filling should be microbiologically stable. Accordingly, in some embodiments it may be preferable for the liquid filling to comprise a saturated solution which is an aqueous solution or an oil-in-water emulsion and for the filling to further comprise components which lower the water activity of the filling. Examples of such components are small molecular weight sugars such as fructose and glucose, sugar alcohols such as glycerol and salts such as sodium chloride.
A preferred liquid filling may be the syrup having the following composition (amounts expressed in weight percent based on the weight of the syrup):

| | |
|---|---|
| Sucrose | 43 |
| 42DE Glucose Syrup Solids | 24 |
| Invert Sugar Solids | 6.6 |
| Colour/flavour | 0.2 |
| Water | 26.2 |

This syrup has good microbiological stability and is close to saturation with respect to sucrose.
In accordance with the present invention, the fat-based confectionery material may contain for example from 5% to 75%, preferably from 10 to 50% and especially from 15 to 40% by weight of the liquid fondant filling based on the total weight of the material.
Preferably the liquid filled bubbles are evenly distributed through the fat-based confectionery material.

In another embodiment the fat-based confectionery material may be dispersed with bubbles containing gas, as well as bubbles containing a liquid fondant filling. The fat-based confectionery materials of the present invention may be prepared by various methods.
A first method comprises mixing edible liquid-filled capsules into liquid chocolate or other fat-based confectionery material and then depositing the mixture into a mould. When set, this would provide a chocolate or other fat-based confectionery material with liquid-filled bubbles. The capsules comprise a wall which contains the liquid filling and this wall may comprise a hydrocolloid gel for example. Preferably the capsule wall is robust enough to survive the process of incorporation into the chocolate but yet rapidly disperses in the mouth when the product is consumed so as not to spoil the "mouthfeel" of the product.
A further process of producing a fat-based confectionery material according to the invention comprising introducing discrete droplets of a liquid filling into a flow of chocolate or other fat-based confectionery material, which is then moulded and solidified before the liquid droplets have had a chance to coalesce.

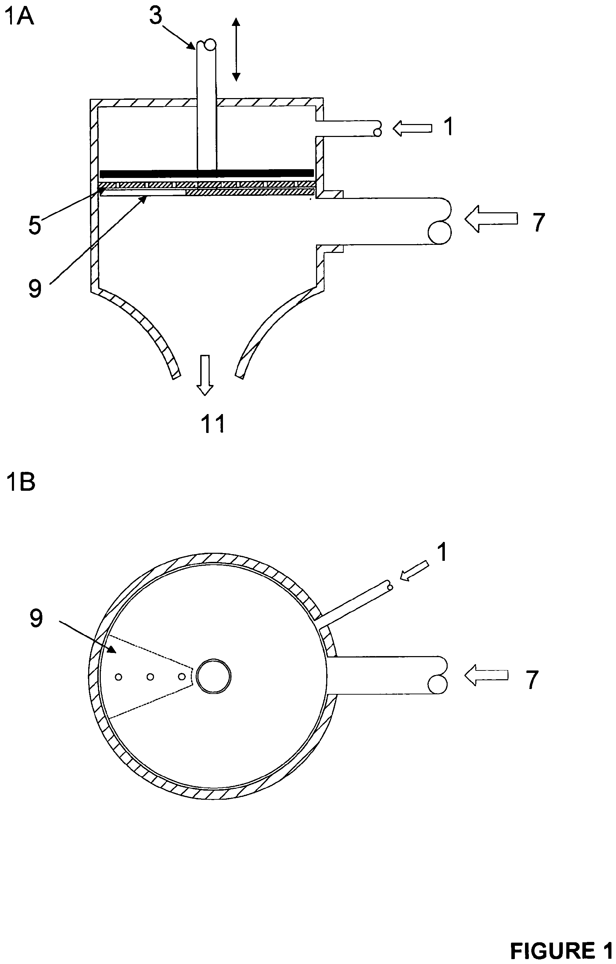

One embodiment of this process is illustrated in Figure 1. Referring to Figure 1, a liquid filling (1) is fed to a piston pump (3). The piston (3) forces the liquid (1) through an array of fixed holes in a perforated plate (5) into a flow of chocolate (7). A rotating valve plate (9) is used to interrupt the flow of liquid (1) through the fixed holes (5) and so produce an output stream of discrete droplets of liquid in the chocolate flow (11). The output from a number (for example five) of these piston pumps (3) is combined and fed to a moulding line where it is deposited into moulds already containing a chocolate shell. The moulds are then backed-off with chocolate in the usual way and cooled before the solidified chocolate containing liquid filled bubbles are demoulded. The moulding line could for example produce tablets of chocolate, although other formats would be possible such as individual pieces. In a further embodiment of the invention, the output stream (11) is deposited into a shelled mould as before, but the mould is then placed in a vacuum chamber to expand the chocolate before it is cooled to solidify the aerated structure and backed-off.

Another process of producing a fat-based confectionery material with a continuous fat phase dispersed with bubbles containing a liquid filling comprises introducing discrete droplets of a cold liquid filling into a flow of fat-based confectionery material such that the cold liquid droplets cause the fat-based confectionery material to solidify around them and form liquid-filled capsules. The cold liquid would preferably be at a temperature of between -40°C and 15°C, more preferably between -30°C and 15°C and most preferably between -20°C and 10°C. The liquid-filled capsules can be harvested from the fat-based confectionery material by a grid conveyor and the excess fat-containing confectionery material recycled.

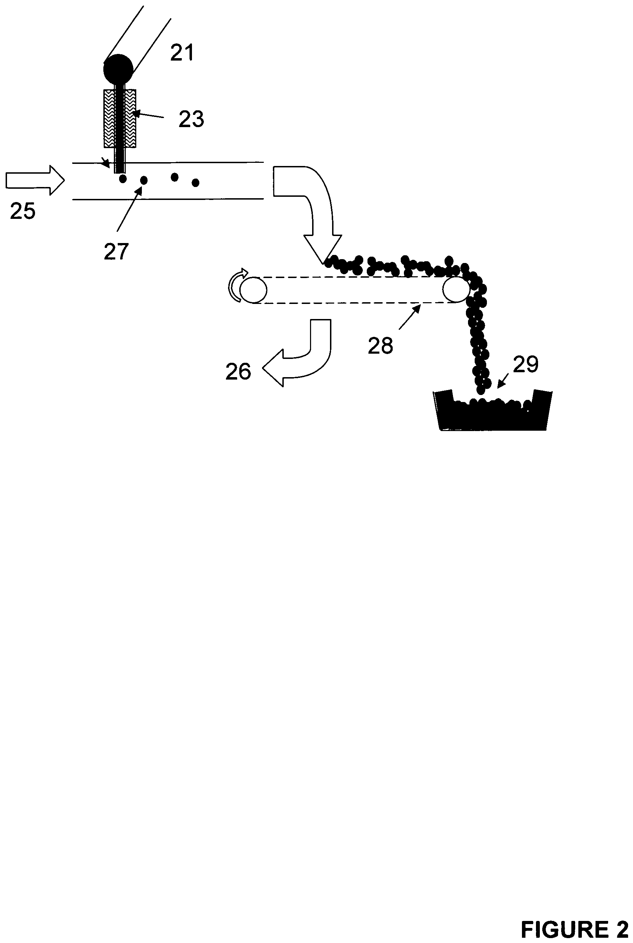

One embodiment of this process is illustrated schematically in Figure 2. In practice, there could be multiple pipes leading into a wide chocolate manifold. Referring to Figure 2, a cold liquid filling is fed through a series of small pipes (one pipe shown, 21). A suitable temperature would be between -40°C and 15°C, preferably between - 30°C and 15°C and more preferably between -20°C and 10°C. The pipes pass through a cold water jacket (23) to maintain or further chill the liquid. The water temperature in the jacket is preferably around 10 to 20°C colder than the temperature of the liquid filling. A feed pump pulses to cause individual drops to flow out of the end of the pipes (21) and into a fast flow of chocolate (25) moving at a minimum velocity of 0.1 ms⁻¹. The chocolate is preferably tempered and the fast flow prevents excessive build up of the chocolate on the pipes. The cold water jacket does not extend into the region of the pipe in contact with the chocolate flow. The cold liquid drops cause the chocolate to solidify around them and form liquid-filled capsules (27).

The capsules (27) are fragile and so are deposited onto a grid conveyor (28) and from there directly into moulds already containing a chocolate shell (29), whilst excess chocolate is recycled (26). The moulds are then backed-off with chocolate in the usual way and cooled before the solidified chocolate containing liquid filled bubbles is demoulded. The moulding line could for example produce tablets of chocolate, although other formats would be possible such as individual pieces. Crispies or aerated chocolate could be combined with the capsules to give a lighter eating product.

In a variation of this process, the cold liquid filling is fed into the chocolate through a porous ceramic or metal material. This results in very small droplets of the liquid filling, with an average diameter between 0.05 mm and 0.5 mm.

A further process of producing a fat-based confectionery material with a continuous fat phase dispersed with bubbles containing a liquid filling comprises introducing discrete droplets of a liquid filling into a liquid fat-based confectionery material and solidifying the material. Preferably the liquid fat-based confectionery material is provided in a mould. The droplets of a liquid filling may introduced by pulsed flow through a series of needles or pipes which move though the liquid fat-based confectionery material. For example an array of needles might be positioned above the mould. Initially the needles will project almost to the base of the liquid fat-based confectionery material and as the liquid filling is introduced into the liquid fat-based confectionery material by a pulsed flow, the array of needles is lifted slowly out of the mould through the confectionery material, thus dispersing discrete droplets of the liquid filling throughout the confectionary material. Finally the confectionery material is solidified to produce a material dispersed with bubbles containing a liquid filling.

Yet the process according to the invention for producing a fat-based confectionery material with a continuous fat phase dispersed with bubbles containing a liquid fondant filling and as defined in claim 11, comprises adding pieces of crystallized sucrose fondant containing invertase into a continuously stirred container of fat-based confectionery material. Preferably the crystallized sucrose fondant contains between 0.1 wt% and 2 wt% invertase based on the weight of the fondant, most preferably between 0.2 wt% and 1 wt%. The crystallized sucrose fondant containing invertase may be added by extrusion through an extruder die with multiple small holes. The holes may typically all have the same diameter, which can range from 0.5 mm to 5 mm. The extruder barrel is preferably fitted with a cooling jacket which cools the fondant such that the fondant exits the die at a temperature of between 0 and 20 °C, preferably between 5 and 15 °C. A rapidly rotating cutter blade on the face of the extruder die cuts the fondant extrudate into small pieces of approximately the same length as the diameter of the die holes. The extruded fondant pieces are dropped into a continuously stirred bath of tempered chocolate immediately after being cut. Preferably, between 15 and 40 % by weight of fondant pieces are added to the chocolate. The chocolate is then deposited into moulds which may already contain a chocolate shell. The moulds may then be placed in a vacuum chamber to expand the chocolate (the vacuum causes air which is naturally dissolved in the chocolate to expand and form bubbles). The chocolate is then cooled to solidify the (aerated structure and backed-off. The chocolate containing pieces of fondant is then left for 2 weeks for the invertase to act on the sucrose in the fondant and convert it to invert syrup. Once this has occurred, the pieces of fondant will have become liquid and so the end result is an aerated chocolate containing liquid filled bubbles, i.e. the chocolate contains a mixture of bubbles containing gas, bubbles containing liquid and bubbles containing both liquid and gas. The vacuum step may be omitted to obtain a non-aerated chocolate containing liquid filled bubbles.
The latter four processes described are advantageous because they result in a product in which the liquid fondant filling of the bubbles is in direct contact with the fat-based confectionery material. This results in a product with a particularly smooth mouthfeel.
A fat-based confectionery material which is dispersed with bubbles containing gas, as well as bubbles containing the liquid fondant filling, may be prepared by any of the above methods by using an aerated fat-based confectionery material (e.g. chocolate). Alternatively the gas-filled bubbles may be incorporated before, at the same time or after the bubbles containing a liquid filling, in a manner known to the skilled person, for example by expanding the material in a vacuum chamber.

The invention also provides confectionery products comprising a fat-based confectionery material as described above. The confectionery product may comprise other food ingredients, such as nuts, dried fruit pieces, biscuits, sugar pieces, crispies, cereals, or other particulate food ingredients, or any combinations thereof. The other food ingredients may be incorporated in amounts of 1 to 75 % by weight based on the total weight of the confectionery product. The confectionery product may further comprise a fat-based confectionery material dispersed with bubbles containing gas. Thus the confectionery product may contain a fat-based confectionery material dispersed with both bubbles containing gas and bubbles containing a liquid filling. Alternatively the confectionery product may contain a first fat-based confectionery material dispersed with bubbles containing gas and a second fat-based confectionery material, which may be the same or different to the first fat-based confectionery material, dispersed with bubbles containing a liquid filling. For example, the confectionery product may comprise a first fat-based confectionery material layered above or below a second fat-based confectionery material.

### Example

The following example is illustrative of the products and methods of making the same falling within the scope of the present invention. It is not to be considered in any way limitative of the invention. Changes and modifications can be made with respect to the invention. That is, the skilled person will recognise many possible variations in this example covering a wide range of compositions, ingredients, processing methods, and mixtures, and can adjust the naturally occurring levels of the compounds of the invention for a variety of applications. All parts are given by weight.

### Prepare a base fondant:

- Dissolve 100 parts refined sugar (sucrose) and 25 parts 42DE Glucose syrup in 50 parts water.
- Cook to 120 °C in an open pan.
- Cool to within the range 38 - 45 °C.
- Beat with a spatula and discharge into cardboard box lined with wax paper.
- Mature for 1 day at about 16 °C.

### Manufacture an orange cream:

- Dissolve 50 parts refined sugar (sucrose) and 14 parts 42DE Glucose syrup in 12 parts water.
- Cook to 115 °C in an open pan.
- Cool to within the range 60 - 70 °C.
- Add 100 parts of base fondant (prepared earlier as described).
- Add 0.3 parts citric acid dissolved in 0.6 parts water, orange flavour and colour.
- Mix well and then add 0.5 parts invertase.
- Transfer to hopper of single screw extruder.

The single screw extruder is fitted with a die having multiple small exit holes of a diameter of 2 mm. A rotating cutter blade is mounted on the die and the speed of the extruder and the cutter adjusted so as to cut the extrudate into pieces approximately 2mm long. The extruder barrel is cooled with a circulating glycol mixture such that the extrudate leaves the extruder at a temperature of 0 °C. The exit of the extruder is positioned such that the cut pieces of extrudate fall directly into a stirred vessel. The exit of the extruder and the stirred vessel are encased in a clear plastic tent fed with a positive pressure of dry air to prevent water condensing on the extruder and dripping into the chocolate.

A milk chocolate, refined to a d90 of 30 µm (90 % of the particles by weight being smaller than 30 µm) with 30.5 % total fat and 0.46 % lecithin and 0.50 % polyglycerol polyricinoleate as emulsifiers, is tempered and transferred to the stirred vessel, held at a temperature of 29 °C. The extruder is started, and the pieces of fondant drop into the stirred chocolate bath. As the pieces of fondant are cold, they solidify the region of chocolate with which they come into immediate contact and form small capsules of fondant, surrounded by a thin layer of solid chocolate. These capsules are distributed into the chocolate by the stirring action.

Once 20 % by weight of fondant has been mixed into the chocolate the extruder and stirrer are stopped and the chocolate/fondant mix is deposited into pre-shelled tablet moulds. The moulds are then transferred to a vacuum box equipped with a water cooling system at 10 °C. Once the chocolate is inside the box, the pressure is reduced to 20 mbar which causes the chocolate to expand. The chocolate remains in the vacuum box at a pressure of 20 mbar for 20 minutes during which time the chocolate temperature has dropped to 13 °C and the chocolate has set. The moulds are then removed from the vacuum box, re-warmed to 25 °C and backed off with more tempered chocolate, cooled and then the chocolate is demoulded as tablets.

After 2 weeks storage at 16 °C the chocolate tablets are cut open to reveal the interior structure which is a series of small bubbles, some containing air, some containing liquid fondant and some containing both air and liquid fondant.

## Claims

1. A fat-based confectionery material with a continuous fat phase **characterised in that** the material is dispersed with bubbles containing a liquid fondant filling, wherein the liquid fondant filling of the bubbles is in direct contact with the fat-based confectionery material.

2. A fat-based confectionery material according to claim 1 wherein the bubbles have a mean diameter of between 0.5 mm and 8 mm, preferably between 1mm and 5mm.

3. A fat-based confectionery material according to any preceding claim wherein the confectionery material contains from 5% to 75 by weight of the liquid fondant filling based on the total weight of the fat-based confectionery material.

4. A fat-based confectionery material according to any preceding claim wherein the bubbles are evenly distributed throughout the fat-based confectionery material.

5. A fat-based confectionery material according to any preceding claim wherein the fat-based confectionery material comprises chocolate or a chocolate substitute.

6. A fat-based confectionery material according to any preceding claim which is dispersed with bubbles containing gas and bubbles containing the liquid fondant filling.

7. A confectionery product comprising a fat-based confectionery material according to any preceding claim.

8. A confectionery product according to claim 7 which further comprises other food ingredients and preferably wherein the other food ingredients are nuts, dried fruit pieces, biscuits, sugar pieces, crispies, cereals, or other particulate food ingredients, or any combinations thereof.

9. A confectionery product according to claim 8 wherein the other food ingredients are incorporated in amounts of 1 to 75% by weight based on the total weight of the confectionery product.

10. A confectionery product according to claim 7 which further comprises a fat-based confectionery material dispersed with bubbles containing gas.

11. Method for producing a fat-based confectionery material with a continuous fat phase dispersed with bubbles containing a liquid fondant filling comprising adding pieces of crystallized sucrose fondant containing invertase into a continuously stirred container of fat-based confectionery material; solidifying the material and allowing the solid fondant pieces to be converted to a liquid fondant by the invertase.

## Patentansprüche

1. Fettbasiertes Süßwarenmaterial mit einer kontinuierlichen Fettphase, **dadurch gekennzeichnet, dass** das Material mit Bläschen dispergiert ist, die eine flüssige Fondant-Füllung enthalten, wobei die flüssige Füllung der Bläschen in direktem Kontakt mit dem fettbasierten Süßwarenmaterial steht.

2. Fettbasiertes Süßwarenmaterial nach Anspruch 1, wobei die Bläschen einen mittleren Durchmesser von zwischen 0,5 mm bis 8 mm, vorzugsweise von zwischen 1 mm bis 5 mm, aufweisen.

3. Fettbasiertes Süßwarenmaterial nach einem der vorstehenden Ansprüche, wobei das Süßwarenmaterial zu 5 Gew.-% bis 75 Gew.-%, bezogen auf das Gesamtgewicht des fettbasierten Süßwarenmaterials, flüssige Fondant-Füllung enthält.

4. Fettbasiertes Süßwarenmaterial nach einem der vorstehenden Ansprüche, wobei die Bläschen innerhalb des fettbasierten Süßwarenmaterials gleichmäßig verteilt sind.

5. Fettbasiertes Süßwarenmaterial nach einem der vorstehenden Ansprüche, wobei das fettbasierte Süßwarenmaterial Schokolade oder einen Schokoladenersatz umfasst.

6. Fettbasiertes Süßwarenmaterial nach einem der vorstehenden Ansprüche, das mit gashaltigen Bläschen und mit die flüssige Fondant-Füllung enthaltenden Bläschen dispergiert ist.

7. Süßwarenprodukt, das ein fettbasiertes Süßwarenmaterial nach einem der vorstehenden Ansprüche umfasst.

8. Süßwarenprodukt nach Anspruch 7, das ferner andere Nahrungsmittelinhaltsstoffe umfasst, und wobei vorzugsweise die anderen Nahrungsmittelinhaltsstoffe Nüsse, Trockenobststücke, Kekse, Zuckerstücke, Crispies, Cerealien oder andere teilchenförmige Nahrungsmittelinhaltsstoffe sind, oder eine Kombination davon.

9. Süßwarenprodukt nach Anspruch 8, wobei die anderen Nahrungsmittelinhaltsstoffe in Mengen von 1 bis 75 Gew.-%, bezogen auf das Gesamtgewicht des Süßwarenprodukts, eingegliedert werden.

10. Süßwarenprodukt nach Anspruch 7, das ferner ein fettbasiertes Süßwarenmaterial umfasst, das mit gashaltigen Bläschen dispergiert ist.

11. Verfahren zum Herstellen eines fettbasierten Süßwarenmaterials mit einer kontinuierlichen Fettphase, das mit eine flüssige Fondant-Füllung enthaltenden Bläschen dispergiert ist, welches das Hinzugeben von Stücken kristallisierten, invertasehaltigen Saccharose-Fondants in einen fortlaufend gerührten Behälter fettbasierten Süßwarenmaterials; das Erstarren des Materials und das Umwandelnlassen der festen Fondantstücke in einen flüssigen Fondant durch die Invertase umfasst.

## Revendications

1. Matériau de confiserie à base de matière grasse avec une phase grasse continue, **caractérisé en ce que** le matériau est dispersé avec des bulles contenant un fourrage fondant liquide, dans lequel le fourrage fondant liquide des bulles est en contact direct avec le matériau de confiserie à base de matière grasse.

2. Matériau de confiserie à base de matière grasse selon la revendication 1, dans lequel les bulles ont un diamètre moyen compris entre 0,5 mm et 8 mm, de préférence entre 1 mm et 5 mm.

3. Matériau de confiserie à base de matière grasse selon l'une quelconque revendication précédente, dans lequel le matériau de confiserie contient de 5 % à 75 % en poids du fourrage fondant liquide sur la base du poids total du matériau de confiserie à base de matière grasse.

4. Matériau de confiserie à base de matière grasse selon l'une quelconque revendication précédente, dans lequel les bulles sont uniformément réparties sur l'ensemble du matériau de confiserie à base de matière grasse.

5. Matériau de confiserie à base de matière grasse selon l'une quelconque revendication précédente, où le matériau de confiserie à base de matière grasse comprend du chocolat ou un succédané de chocolat.

6. Matériau de confiserie à base de matière grasse selon l'une quelconque revendication précédente, qui est dispersé avec des bulles contenant du gaz et des bulles contenant le fourrage fondant liquide.

7. Produit de confiserie comprenant un matériau de confiserie à base de matière grasse selon l'une quelconque revendication précédente.

8. Produit de confiserie selon la revendication 7, qui comprend en outre d'autres ingrédients alimentaires et de préférence dans lequel les autres ingrédients alimentaires sont des fruits à coques, des morceaux de fruit sec, des biscuits, des morceaux de sucre, des éléments croustillants, des céréales, ou d'autres ingrédients alimentaires particulaires, ou n'importe quelle combinaison de ceux-ci.

9. Produit de confiserie selon la revendication 8, dans lequel les autres ingrédients alimentaires sont incorporés en des quantités de 1 à 75 % en poids sur la base du poids total du produit de confiserie.

10. Produit de confiserie selon la revendication 7, qui comprend en outre un matériau de confiserie à base de matière grasse, dispersé avec des bulles contenant du gaz.

11. Procédé de production d'un matériau de confiserie à base de matière grasse avec une phase grasse continue dispersée avec des bulles contenant un fourrage fondant liquide comprenant l'ajout de pièces de fondant de saccharose cristallisé contenant de l'invertase dans un récipient agité en continu de matériau de confiserie à base de matière grasse ; la solidification du matériau et la conversion naturelle des pièces de fondant solide en un fondant liquide par l'invertase.
